Europäisches Patentamt

European Patent Office

Office européen des brevets

(11) Publication number: **0 389 730**
**A2**

## (12) EUROPEAN PATENT APPLICATION

(21) Application number: **89500130.3**

(51) Int. Cl.⁵: **G06K 7/08, G06K 13/08**

(22) Date of filing: **18.12.89**

(30) Priority: **31.03.89 ES 8901132**

(43) Date of publication of application:
**03.10.90 Bulletin 90/40**

(84) Designated Contracting States:
**AT BE CH DE FR GB GR IT LI LU NL SE**

(71) Applicant: **AMPER S.A.**
**Torrelaguna, 75**

**E-28027 Madrid(ES)**

(72) Inventor: **Penas Manrique, Juan Carlos D.**
**Torrelaguna, 75**
**E-28027 Madrid(ES)**

(74) Representative: **Carpintero Lopez, Francisco**
**HERRERO & ASOCIADOS, S.L. Alcalá, 21**
**E-28014 Madrid(ES)**

(54) **Manual reading device for magnetic characters.**

(57) The manual reading device for magnetic characters relates to a system for reading documents which is typically used in banking spheres. The function of this device is to read a coded line of standardised characters provided on such documents, and send same through a communications channel to a computer, generally for subsequent processing or storage.

The system is comprised by a small module which is similar in appearance to a conventional magnetic card reader, its essential characteristics being that of effecting the reading by manually dragging the documents, without having any element for recording the speed at which same are displaced, and that the recognition algorithm is independent of the speed at which the document is dragged through, and of changes therein.

FIG.-I

EP 0 389 730 A2

## OBJECT OF THE INVENTION

The present invention, in accordance with the title of the specification, relates to a manual reading device for magnetic characters, a system for reading documents which is typically used in banking spheres. The function of this device is to read a coded line of standardised characters provided on such documents, and send same through a communications channel to a computer, generally for subsequent processing or storage.

## BACKGROUND OF THE INVENTION

Mos of the mentioned documents use one or more of the following standardised character codes: CMC-7, E13B, OCR-A, OCR-B.

All of these codes are described in the norms and recommendations of international standardising organisms. The first of these two codes have been developed in order to facilitate magnetic reading (MICR type: Magnetic Ink Character Recognition), and must be printed with a special ink containing magnetic particles. The other two codes have been developed for optical reading (OCR type: Optical Character Recognition) and do not specify what type of ink they should be printed with.

MICR code CMC-7 is one of the most widely used. The characters in this code are defined on the basis of 7 vertical bars which define the character figure they represent, such that it may also be read by simple observation. However, the information on the character it represents for the purposes of computerization of the reading is provided by the separation between the 7 bars. Wide and narrow separations are defined within the character, as is the separation between characters, such that, with their respective tolerances, there is no overlapping between the magnitudes thereof. All the characters comprise 2 "wide" separations, the rest being narrow. The relative position of such separations defines the character in question.

Conventional reading methods use a magnetic reading head, before which pass the previously magnetised characters to be read. A current is induced in the magnetic head, the direction of which depends on whether the magnetised material making up the ink with which the characters are printed is approaching or receding. This current, when amplified, presents a wave form comprised of "peaks", in which one flank represents the approaching "bar" and the opposite flank represents the receding bar. The magnitude of the induced signal is proportional to the passage speed, size and magnetization of the "bars" (which is usually constant since they become saturated), in other words, it is proportional to the derivative of the magnetic flux with respect to the clearance of the reading head. The position of these "peaks" in time depends only on the passage speed. Thus, the conventional system uses the known speed at which the documents are dragged before the reading head, wherefore, by suitably dimensioning the amplifying stages, it would be relatively easy (since the speed is known) to extract the information from the signal obtained. Other systems using manual drag make use of a monitor for recording the drag speed, such that, by knowing the speed at each moment, the signal obtained may likewise be easily decoded.

## DESCRIPTION OF THE INVENTION

The manual reading device for magnetic characters described by the invention presents as a novelty the fact that it has no monitors for measuring the passage speed of the document, the recognition software used being insensible (within certain limits) to speed variations.

The system is comprised by a small module which is similar in appearance to a conventional magnetic card reader. It is provided with a groove on its upper area, where the document to be read is introduced (from the right), with the coded line facing the operator and on the lower part. Once within the groove, the document is manually dragged towards the left, without surpassing the specified speed and/or acceleration limits.

Associated to the reading device itself is a power source, connected thereto by means of a cable, installation and handling of the assembly being very simple, and maintenance non-existent. The moving mechanical elements of the system are practically non-existent, which renders the system highly trustworthy.

Operation of the system is on-line, connected to a computer with an RS-232C interface, some of the parameters thereof being programmable by microswitches provided within the system.

All the above allows reading to be effected by manual dragging of the documents, without the need for an element to record the speed at which the same are displaced. The recognition algorithm is independent (within specified limits) of the speed at which the documents passes through, and of changes in speed (also within certain specified limits).

## DESCRIPTION OF THE DRAWINGS

In order to complete the description being made, and to assist the better understanding of the characteristics of the invention, a set of drawings is attached to the present specification, as an integral part thereof, where the following have been shown in an illustrative and non-limiting manner:

Figure 1.- Shows a general view of the manual reading device for magnetic characters with the power source proposed by the invention.

Figure 2.- Shows an upper plan view of the optical reading device for magnetic characters.

Figure 3.- Shows a lower plan view of the same reading device.

Figure 4.- Shows a broken down view of the reading device.

Figure 5.- Shows a cross section along line A-A'.

Figure 6.- Shows a block diagram of the system for processing the information supplied by the manual reading device for magnetic characters.

## PREFERRED EMBODIMENT OF THE INVENTION

In the light of the figures, it can be observed that the manual reading device for magnetic characters being described is comprised by two units, one of which is a power source 1 and the other the reading device 2 itself, the two being joined by a cable 3. By separating the reading system for the mains with an external transformer, a greater adaptation is achieved.

Power source 1 is comprised such that the power transformer is housed within a plastic casing, a cable 3 emerging from the said transformer with connections from the secondary winding, and ending in a female connector sub-D type of nine pins which is connected to reading device 2. The mains cable 4 ends in a standard mains plug 5.

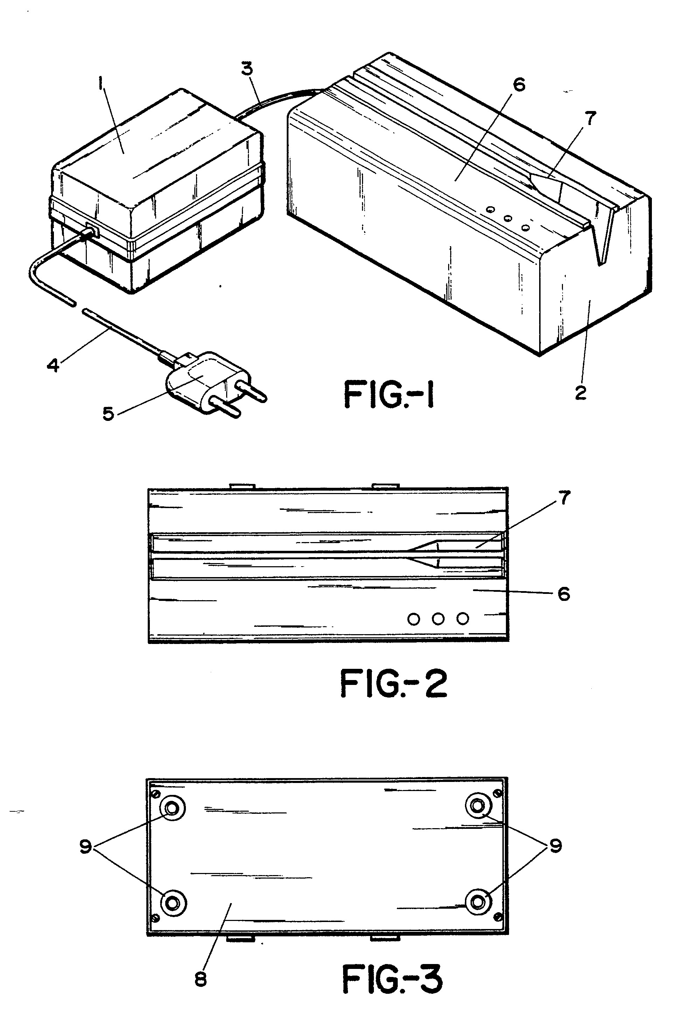

Figures 2 and 3 show the main module which constitutes reading device 2, and includes most of the elements. Externally, it can be considered as comprised by three parts. The main casing 6, made of metal, acts as a support for the rest of the module. Document guide 7 is a plastic piece which is internally fastened to the casing 6. Finally, the base of the device 8, likewise made of metal, to which are fastened rubber supports 9 and the base of the printed circuit plate 10 within.

Inside the device, which is accessible by unscrewing the four screws of metal base 8, is housed the base printed circuit plate 10, fastened thereto, which carries all the electronic elements of the system with the exception of the sensor and signal elements which are connected thereto by means of connectors. Fastened within the casing 6 is the document guide 7, visible from the outside and protected by a metal sheet 11 which likewise functions as a shield against external electromagnetic interferences which could reach the reading head, very sensitive to interferences of this type. The reading and premagnetization heads 12 and 13 are located on the said sheet. Furthermore, there is a small printed circuit plate 14, carrying three LEDS for indicating the state of reading device 2 for the user. Finally, there is provided a ceramic resonator 15, the function whereof is to acoustically indicate certain operations to the user.

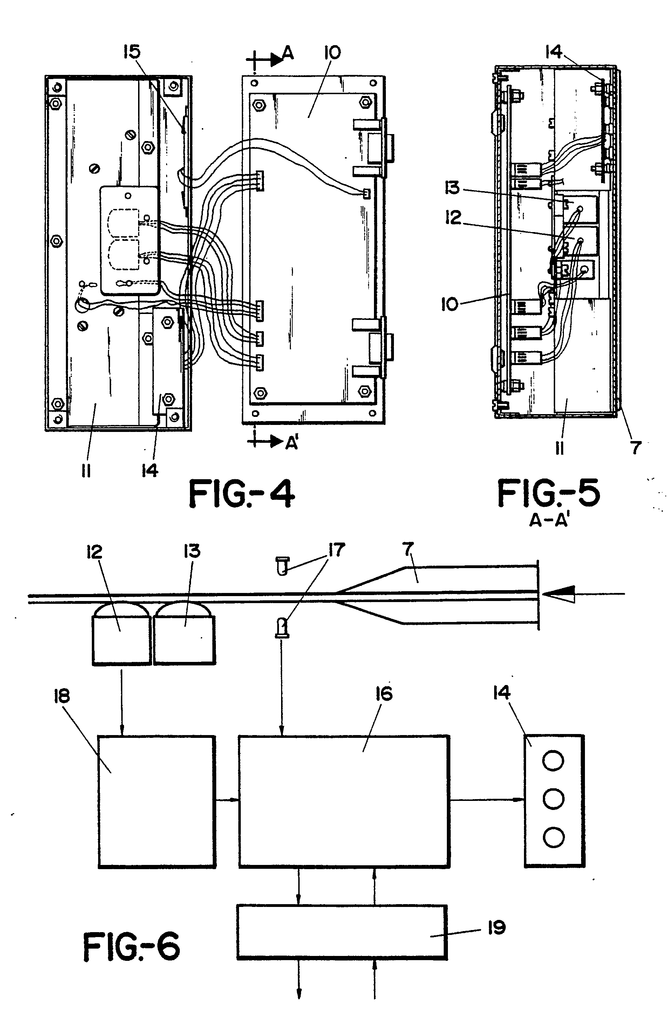

The central part of the block diagram shown in figure 6 is comprised by a microcontroller 16, which is reached by signals from the different sensors, such as the reading head 12 and input photodetector 17, and from which emerge the signal and communication lines.

The CMC-7 reading heads can be indicated as main blocks, comprised in turn by the reading head 7, together with the process assembly formed by the CMC-7 detector 18. The input photodetector 17 and the programming microswitches make up the remaining blocks which supply information to the microcontroller. As output blocks, the LEDS and the resonator for indicating functions to the user. The RS-232C interface 19 is the communication means of the system with the central computer.

The power source is physically separated into two units. The power transformer 1 is external and supplies various alternating voltages to reading device 2. The printed circuit plate of reader 10 comprises the rectifier for converting such alternating voltages to direct voltages, adjusted to the required magnitude.

The function of the device is to read the CMC-7 coded character line printed with magnetic ink on documents as specified by ISO norm 1004. For such purpose, it is provided with a groove 7, through which the document is introduced. The dragging of the document along the groove must be done manually and within the speed limits and changes thereof as specified therein.

Once the document in question has been introduced within groove 7, presence thereof is detected by the input photodetector 17 and reading takes place. All the magnetic material comprising the character is magnetised as it passes before magnetising head 13. The signal sent by the CMC-7 reading head 12 is of variable amplitude and reflects the passage of the bars making up the CMC-7 characters before reading head 12. The CMC-7 detector circuit 18 standardises the signal and transforms same into pulses of logical magnitudes of the same length as the time taken by a bar to pass reading head 12. This signal is analyzed by microcontroller 16. Detection of the end of the document (which is inferred when a specified time interval elapses without changes in the signal level), initiates the decoding process. At the end of such process, a sequence is obtained with the decoded characters and is sent to the main computer via the series channel, the user being simultaneously informed by means of the LEDS and the resonator of whether the reading was correct or not.

It is not considered necessary to extend the present description any further for a person skilled in the art to which it pertains to understand the scope of the invention and the advantages derived therefrom.

The materials, shape, size and arrangements of the elements may vary, provided such variation does not imply a modification of the essentiality of the invention.

The terms used in the description of the specification should be understood to have a wide and non limiting meaning.

## Claims

1.- MANUAL READING DEVICE FOR MAGNETIC CHARACTERS, which, being designed to read a coded line formed by standardised characters provided on documents typically used in banking spheres, and to send same via a communication channel to a computer, generally for its subsequent processing or storage, is essentially characterised in that it is comprised by a power source 1 made up by a transformer with a plurality of outlets and a magnetic character reading device 12, both being joined by a cable 3, which character reading device 12 includes the necessary elements for detecting, reading and processing the information.

2.- MANUAL READING DEVICE FOR MAGNETIC CHARACTERS, in accordance with claim 1, comprised by a main casing 6, a document guide 7 internally fastened to the main casing 6, the base of the device 8 to which are fastened rubber supports and a printed circuit plate 10 within.

3.- MANUAL READING DEVICE FOR MAGNETIC CHARACTERS, in accordance with the preceding claims, characterised in that the reading device 2 itself is comprised by a document groove 7, an input photodetector 17, a magnetising head 13 and a document reading head 12, related whereto is a detector 18, connected to a microcontroller 16 with the aid of LED signalling elements 14, acoustic elements through ceramic resonator 15 and communications via RS-232C interface 19.

4.- MANUAL READING DEVICE FOR MAGNETIC CHARACTERS, in accordance with the preceding claims, characterised in that the power source is physically distributed, since the regulation and supply elements of direct voltage necessary for the operation of reading device 2 are located within the actual reading device, whereas the transformer is located within the source.

FIG.-1

FIG.-2

FIG.-3

EP 0 389 730 A2

FIG.-4

FIG.-5
A-A'

FIG.-6